(19) Europäisches Patentamt / European Patent Office / Office européen des brevets

(11) **EP 4 495 454 A1**

(12) **EUROPEAN PATENT APPLICATION**

(43) Date of publication:
22.01.2025 Bulletin 2025/04

(21) Application number: 23275109.9

(22) Date of filing: 20.07.2023

(51) International Patent Classification (IPC):
*F16F 15/10* (2006.01)

(52) Cooperative Patent Classification (CPC):
F16F 15/10

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(71) Applicant: BAE SYSTEMS plc
London SW1Y 5AD (GB)

(72) Inventor: The designation of the inventor has not yet been filed

(74) Representative: BAE SYSTEMS plc
Group IP Department
Warwick House
P.O. Box 87
Farnborough Aerospace Centre
Farnborough Hampshire GU14 6YU (GB)

(54) **CONTROL ARRANGEMENT AND METHOD**

(57) A control arrangement (100) for controlling torsional vibration of a structure (110), the control arrangement comprising a body (120) and a control element configuration (130) providable along the body, wherein the body is couplable to the structure, the control arrangement being configurable to cause a decrease in wave speed of torsional vibration of the body.

Fig. 3

**Description**

FIELD

The present invention relates to a control arrangement, in particular to a control arrangement for controlling torsional vibration of a structure. The present invention further relates to a method of controlling torsional vibration of a structure.

BACKGROUND

Torsional vibration is angular vibration of an object or structure. A common example is angular vibration of a shaft about its axis of rotation. Torsional vibration may be caused by speed fluctuations of various components and the twisting of sections of the object or structure during its rotation.

Excessive torsional vibration can lead to failure of components, such as shafts, couplings, fans, gears, engine dampers, and the like. Torsional vibration is often a concern in power transmission systems using rotating shafts or couplings. Torsional vibration can also result in other vibration effects or the generation of noise.

Existing control arrangements for controlling, or damping, torsional vibration include viscous dampers and tuned absorbers (otherwise known as harmonic dampers). Problems associated with such existing control arrangements include a requirement for space to incorporate the control arrangement, potential for failure or damage of the control arrangement due to the components and materials required, and insufficient control or damping of particular vibrational frequencies.

It is one aim of the present invention, amongst others, to provide an improved control arrangement and/or address one or more of the problems discussed above, or discussed elsewhere, or to at least provide an alternative control arrangement.

SUMMARY

According to a first aspect of the present invention, there is provided a control arrangement for controlling torsional vibration of a structure, the control arrangement comprising body and a control element configuration providable along the body, wherein the body is couplable to the structure, the control arrangement being configurable to cause a decrease in wave speed of torsional vibration of the body.

In one example, the body is couplable to, or with, the structure by being connectable to, providable in, or being part of, the structure. In one example, the body is coupled to the structure. In one example, the body is connected to, provided in, or part of, the structure.

In one example, the control element configuration comprises one or more regions of different material characteristic.

In one example, the material characteristic is rigidity, density and/or shear modulus.

In one example, the control element configuration comprises a plurality of control elements. In one example, the control element configuration comprises a control element in the form of a graduated or varying material characteristic.

In one example, the control element configuration comprises a plurality of control elements. In on example, the control element configuration comprises a plurality of mass members. In one example, the control element configuration comprises spaced apart mass members.

In one example, a damping material is provided between one or more pairs of mass members.

In one example, one or more of the mass members have: a disc-shaped cross section; a cross-shaped cross section; or a star-shaped cross section.

In one example, the body has a tapered cross section along at least part of its length.

In one example, in at least a subset of the mass members, a dimension of each mass member is the same as a dimension of the structure at a first end.

In one example, the body has a constant cross section along at least part of its length.

In one example, in at least a subset of the mass members, a dimension of each mass member increases along the length of the body.

In one example, the body has a first region of tapering cross section along a first part of its length and a second region of constant cross section along a second part of its length.

In one example, the structure is a shaft. In one example, the control arrangement is configured to be couplable to the shaft. In one example, the control arrangement is connectable to, providable in, on, or as part of the shaft. In one example, the control arrangement is coupled to the shaft. In one example, the control arrangement is connected to, provided in, or, or as part of the shaft.

In one example, the body is hollow.

In one example, the hollow body comprises at least a region of constant wall thickness and/or at least a region of decreasing wall thickness.

In one example, the control element configuration is provided on an inner surface and/or an outer surface of the hollow body.

According to a second aspect of the present invention, there is provided a method of controlling torsional vibration of a structure, the method comprising: providing a control arrangement comprising a body and a control element configuration, wherein the body is couplable to the structure; providing the control element configuration along the body; and causing, by the control arrangement, a decrease in wave speed of torsional vibration of the body.

In one example, the method comprises coupling the body with the structure. In one example, the method comprises coupling the body with the structure by connecting the body and the structure, providing the body in or on the structure, or providing the body as part of the structure.

In one example, the method comprises providing a control element configuration comprising a plurality of control elements. In one example, the plurality of control elements may be mass members. In one example, the method comprises spacing the control elements, or mass members, apart along the structure.

According to a third aspect of the present invention, there is provided a vehicle comprising a control arrangement according to the first aspect of the present invention.

According to a fourth aspect of the present invention, there is provided a component, for example a damped component, comprising a control arrangement according to the first aspect of the present invention. The component may be, or comprise, the structure.

According to a further aspect of the present invention, there is provided a method of manufacturing a control arrangement according to the first aspect of the present invention. The method comprises providing a body and a control element configuration, wherein the body is couplable to the structure; providing the control element configuration along a body; and configuring the control arrangement to cause a decrease in wave speed of torsional vibration of the body.

Features of any one aspect may be combined with features of any other aspect, as desired or as appropriate. In particular, features of the control arrangement according to the first aspect may be combined with features of the method, vehicle or structure according to the second, third and fourth aspects.

BRIEF DESCRIPTION OF THE FIGURES

Embodiments of the invention will now be described by way of example only with reference to the figures, in which:

Figure 1 shows a control arrangement;
Figure 2 shows a control arrangement;
Figure 3 shows a control arrangement;
Figure 4 shows a control arrangement;
Figure 5 shows a control arrangement;
Figure 6 shows a control arrangement provided with a damping material;
Figure 7(a) and 7(b) shows control arrangement cross sections;
Figure 8(a) to (c) shows control arrangements comprising hollow shafts;
Figure 9 shows an example of a coupled control arrangement and structure;
Figure 10 shows an example of a coupled control arrangement and structure;
Figure 11 shows a vehicle;
Figure 12 shows a construction; and
Figure 13 shows general methodology principles.

DETAILED DESCRIPTION

In overview of the disclosure provided herein, control arrangements are described which are configured to reduce the wave speed of torsional vibration of, or in, a body. By reducing the wave speed of torsional vibration, the effect of material losses within the control arrangement is increased due to the decrease in wavelength of the torsional vibration. That is, damping as a result of structural losses increases as the wavelength of the torsional vibration decreases. In this way, energy (i.e., unwanted energy due to torsional vibration) is more efficiently and effectively dissipated. Furthermore, in this way, energy (i.e., unwanted energy due to torsional vibration) passed from a structure to the body is more efficiently and effectively dissipated.

This can be understood from a theoretical perspective. The torsional wave speed c is defined as

$$c = \sqrt{\frac{G\,J(x)}{I(x)}}$$

where $G$ is the shear modulus, $J(x)$ is the polar moment of inertia or torsional constant, and $I(x)$ is the mass moment of inertia.

However, for a uniform cross section of the structure, $J(x) = \iint xy\,dx\,dy$ and $I(x) = \iint \rho xy\,dx\,dy$. Therefore, the torsional wave speed c reduces to

$$c = \sqrt{\frac{G}{\rho}}$$

and thus it may be understood that a change in diameter of the structure alone does not affect the wave speed of torsional vibration.

In the present disclosure, mechanisms, or approaches, to reduce the wave speed of torsional vibration include:

1. Reducing the material shear modulus $G$
2. Increasing the material density $\rho$
3. Providing a control arrangement having a non-uniform cross section that reduces the ratio of the polar moment of inertia $J(x)$ to mass moment of inertia $I(x)$ (e.g., maintains the same effective mass moment of inertia $I(x)$ but decreases in polar moment of inertia $J(x)$, or increases the effective mass moment of inertia $I(x)$ but maintains the polar moment of inertia $J(x)$)

The embodiments described herein each incorporate one or more of these mechanisms or approaches in order to cause or affect a decrease in wave speed of torsional vibration. The mechanisms may be combined, which may enhance the damping effect.

Control arrangements for controlling torsional vibration of a structure will be described. Vibration in the structure (to which the control arrangement is couplable, or is coupled to) is absorbed and dissipated by the control arrangement.

Comparisons may be drawn with the acoustic black hole effect. An acoustic black hole is a device or constructions configured to exhibit the acoustic black hole effect. The acoustic black hole effect involves causing the wavelength of vibration propagating along the acoustic black hole to be reduced to zero.

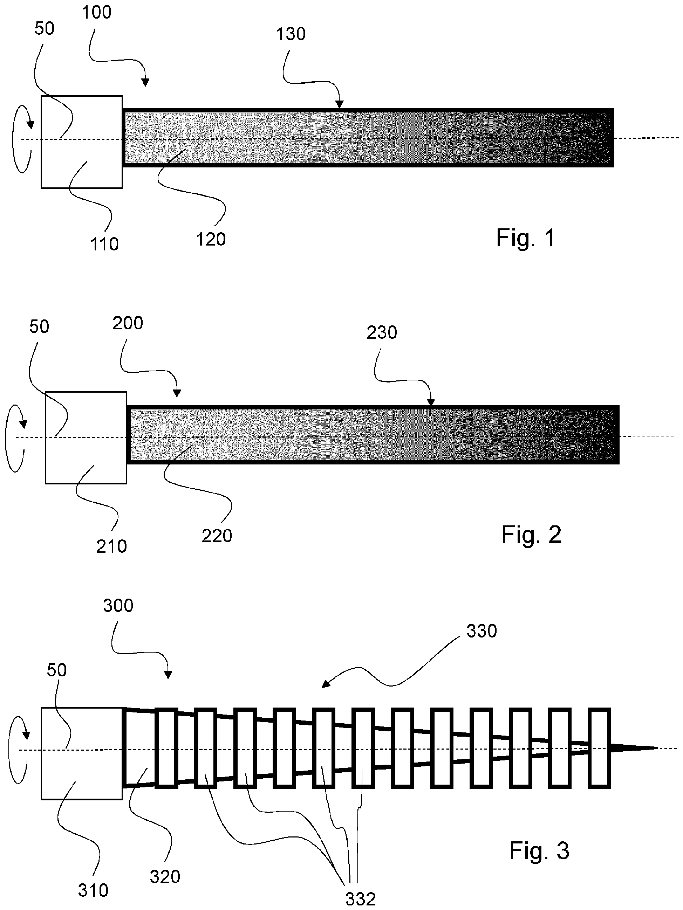

In the present disclosure, the structure may be any object or component, for example a shaft, coupling, fan, or gear. The structure may be any rotatable component, i.e., a component configured to rotate, or be rotated, in use. Rotation of the structure may cause, generate, or result in, torsional vibration. In the examples described herein, the structure (and a body which is coupled to the structure) is configured to rotate about an axis (e.g., a longitudinal axis, indicated as axis 50 in Figures 1 to 5 and 9, with the direction of rotation indicated by the associated arrow). In a particularly advantageous arrangement, the control arrangement used in combination with a shaft. A shaft may be an elongate member which is configured to be rotated, in use. The control arrangement may be coupled to the shaft. A shaft may be subjected to torsional vibration and torsional forces, and thus controlling torsional vibration thereof is highly advantageous in reducing risk of damage or failure due to fatigue. A further advantage associated with application to a shaft is the reduction in level of generated noise.

In general, the structure may be any structure, object or component to which the control arrangements described herein may be coupled, or couplable, to. The structure and control arrangement may together be referred to as an assembly, vibrationally controlled assembly, or a damped structure or damped component. In an example, the control arrangement being coupled or couplable to the structure may be by virtue of the control arrangement being connected, or connectable to, the structure. For example, the control arrangement may be connected at an end of the structure, or to a surface of the structure. In a further example, the control arrangement being coupled or couplable to the structure may be by virtue of the control arrangement being providable on or in the structure. For example, the control arrangement may replace a section of the structure, for example a section or portion of the structure may be replaced with the control arrangement, and the control arrangement may act as a part of the structure. In a further example, the control arrangement being coupled or couplable to the structure may be by virtue of the control arrangement being part of the structure. For example, the body of the control arrangement (described in greater detail below) may actually be provided by the structure itself. That is, the body may be provided by a body, or body portion, of the structure. The control element configuration may be providable along the body, and in this example this means that the control element configuration is providable along the structure. Furthermore, in such an example it may be considered that the control element configuration acts to cause a decrease in wave speed of torsional vibration in the structure. This is in contrast to providing a specific, or distinct, body portion - instead, the structure itself provides the body. In relation to the above, coupling, by connecting, providing on or in, or as part of the structure, allows torsional vibration to be passed from the structure to the control arrangement, to be controlled thereat. Each of the couplings described above may be highly advantageous, as torsional vibration of the structure can propagate to the control arrangement to be controlled, thereby reducing torsional vibration, reducing noise, and/or reducing fatigue or damage to the structure. Coupling by connecting the control arrangement to the structure may be simple to construct. Coupling by providing the control arrangement on or in the structure may reduce the overall weight, save space, and improve the propagation of torsional vibration from the structure to the control arrangement. Coupling by the control arrangement being part of the structure may reduce the overall weight and save space.

Referring to the figures, various embodiments of control arrangements are shown. Each control arrangement described herein is for controlling torsional vibration of a structure. Each control arrangement comprises a control element configuration, which may comprise or be a plurality of control elements. For avoidance of doubt, and as will be described in greater detail below, control elements may include mass members or regions, or sections, of reduced shear modulus or increased material density. Control elements are providable along the body (which as above may be a distinct body of the control arrangement, or indeed a part of the structure itself). Each control arrangement is configurable to cause a decrease in wave speed of torsional vibration of the body. In other words, when the structure is subjected to, or experiences, torsional vibration, the control arrangement may cause (or "function so as to cause") a decrease in wave speed of torsional vibration of the body. The body may be connected to, or be part of, a structure which is part of a vibrating system or is a source of vibration. For example, the structure may be a component part of an engine.

Referring to Figure 1, a first embodiment of a control arrangement 100 is shown. The control arrangement 100 is for controlling torsional vibration of a structure 110. The control arrangement 100 comprises a body 120. The body 120 is coupled to the structure 110. In this example, the body 120 is coupled to the structure 110 by being connected at an end of the structure 110. The control arrangement 100 comprises a control element configuration 130, which may otherwise be referred to as a control element arrangement 130. The control element configuration 130 may act to cause a decrease in wave speed of torsional vibration in the body 120. The control element configuration 110 is provided along the body 120. As mentioned above (and also relevant to Figures 2 to 5 and 9), the structure 110 and body 120 are configured to rotate about axis 50 in the direction of the associated arrow. Rotation results in the generation of torsional vibration which it is desired to control.

In the first embodiment (and also in the second embodiment described below), the control element configuration 130 comprises one or more regions of different material characteristic. That is, each region may have a different material characteristic, and/or within a region the material characteristic may be graded or graduated or gradually varying. The term "material characteristic" is used to refer to a characteristic of the material from which the control element configuration 130 and/or body 120 is formed, where for example the characteristic may be rigidity, density and/or shear modulus. Such characteristics are suited to causing a decrease in wave speed of torsional vibration of the body 120 when employed in the manner described herein.

In the first embodiment, the material shear modulus G is graduated, or "graded", along the length of the body 120. Here, the shear modulus gradually reduces along the length of the body 120. This is an example of the first mechanism described above to reduce the wave speed of torsional vibration of the body 120. The control element configuration 130 may be provided on or in the body 120. That is, the body 120 itself may be formed so as to provide the control element configuration 130 - in other words, the body 120 may have a gradually reducing shear modulus along its length, thereby providing the control element configuration 130.

The control element configuration 130 may comprise a stack of discs of different materials, having gradually reducing shear modulus. Alternatively, or additionally, additive manufacture may be used to provide the graduated shear modulus of the control element configuration 130. In an example, the control element configuration 130 may comprise a variation from PMMA/acrylic (e.g., as a material of relatively higher shear modulus) to a thermoplastic elastomer/rubber (e.g., as a material of relatively lower shear modulus).

Gradually reducing the shear modulus is advantageous in reducing the wave speed of torsional vibration, and thus providing damping. However, a problem associated with this approach may be undesired or impractical levels of flexibility of the control element configuration 130 and/or body 120.

Referring to Figure 2, a second embodiment of a control arrangement 200 is shown. The control arrangement 200 is for controlling torsional vibration of a structure 210. The control arrangement 200 comprises a body 220. The body 220 is coupled to the structure 210. In this example, the body 220 is coupled to the structure 210 by being connected at an end of the structure 210. The control arrangement 200 comprises a control element configuration 230. The control element configuration 230 is provided along the body 220. In the second embodi-

ment, the material density $\rho$ is graduated, or "graded", along the length of the structure. Here, the density gradually increases along the length of the body 220. This is an example of the second mechanism described above to reduce the wave speed of torsional vibration. The control element configuration 230 may be provided on or in the body 220. That is, the body 220 itself may be formed so as to provide the control element configuration 230 - in other words, the body 220 may have a gradually increasing density along its length, thereby providing the control element configuration 230.

The control element configuration 230 may comprise a series or stack of discs of different materials, having gradually increasing density. Alternatively, or additionally, additive manufacture may be used to provide the graduated density of the control element configuration 230. In an example, the control element configuration 230 may comprise a variation from carbon fibre (e.g., as a material of relatively lower density) to tungsten (e.g., as a material of relatively higher density).

Gradually increasing the density is advantageous in reducing the wave speed of torsional vibration, and thus providing damping. However, a problem associated with this approach is that it may only be possible to achieve a relatively small change in density with practical materials for the control element configuration 230 and/or body 220. Level of control of torsional vibration may thereby be less than necessary or desired.

In relation to Figures 1 and 2 described above, variation in shear modulus or density, as the aforementioned material characteristic, is described. In a further example, the material characteristic may be rigidity. The rigidity may be graduated to interact with the torsional vibration to cause a decrease in the wave speed thereof.

Referring to Figure 3, a third embodiment of a control arrangement 300 is shown. The control arrangement 300 is for controlling torsional vibration of a structure 310. The control arrangement 300 comprises a body 320. The body 320 is coupled to the structure 310. In this example, the body 320 is coupled to the structure 310 by being connected at an end of the structure 310. The control arrangement 300 comprises a control element configuration 330. The control element configuration 330 comprises a plurality of control elements 332. The control elements 332 are in the form of mass members. The control elements 332 may be in the form of solid discs. The plurality of control elements 332 are provided along the body 320. The control element configuration 330 comprises spaced apart control elements 332, which may be in the form of mass members. In the third embodiment, a non-uniform cross section is provided by the control arrangement 300 when provided on the body 320, due to the provision of the spaced apart control elements 332. In this way, the outer diameter varies along the length of the body 320 between the diameter of the control elements 332 and the diameter of the body 320 itself. In other words, the cross section across the length of the body 320 varies along its length due to the provision of spaced apart control elements 332. In this example, the body 320 is tapered thereby reducing the polar moment of inertia J(x), and the control elements 332 each have the same radius as the body 320 (or the structure 310) at its widest point thereby maintaining the same effective mass moment of inertia I(x). That is, a dimension of each control element 332 (or mass member) is the same as a dimension of the body 320 (or the structure 310) at a first end (e.g., its widest end). This approach is an example of the third mechanism described above to reduce the wave speed of torsional vibration. In this mechanism, it is considered that the spaced apart control elements 332 (or the step change in diameter as a result of the control elements 332 being provided on the body 320) presents an impedance to a vibration wavefront propagating through the body 320, which results in reflections causing interference (e.g., both constructive and deconstructive interference). In this way, the energy of the vibration wavefront is concentrated or "trapped" at frequency dependent locations and is damped thereat. This is known as rainbow trapping. In this way, vibrations may be damped by the control arrangement 300.

In this way, a significant reduction in wave speed of torsional vibration is possible. Furthermore, a reduction in total mass of the control arrangement is achieved. A further advantage is that the control arrangement 300 of the third embodiment maintains the same maximum radius as the body 320 (or of the structure 310), and as a result not additional space is required compared with that of a body 320 (or structure 310) of constant radius.

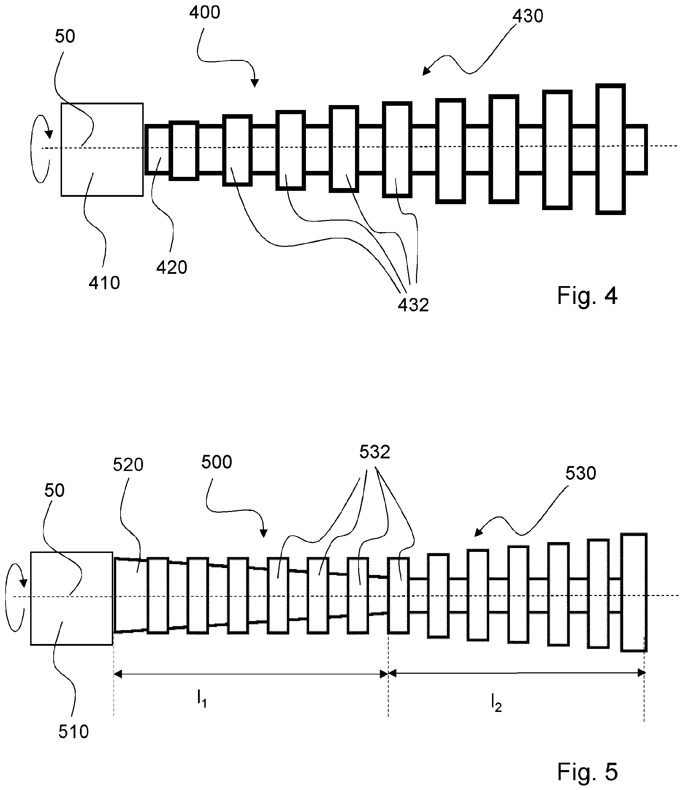

Referring to Figure 4, a fourth embodiment of a control arrangement 400 is shown. The control arrangement 400 is for controlling torsional vibration of a structure 410. The control arrangement 400 comprises a body 420. The body 420 is coupled to the structure 410. In this example, the body 420 is coupled to the structure 410 by being connected at an end of the structure 410. The control arrangement 400 comprises a control element configuration 430. The control element configuration 430 comprises a plurality of control elements 432. The control elements 432 are in the form of mass members. The control elements 413 may be in the form of solid discs. The plurality of control elements 432 are provided along the body 420. The control element configuration 430 comprises spaced apart control elements 432, which may be in the form of mass members. In the fourth embodiment, the control arrangement 400 has a non-uniform cross section as a result of the provision of the control elements 432. That is, the cross section across the length of the body 420 varies along its length due to the provision of spaced apart control elements 432. In this example, the body 420 has a constant diameter along its length (in contrast with the tapered diameter of the body 320 in the third embodiment). The control elements 432 increase in radius along the length of the body 420. That is, the control elements 432 are arranged along the body 420 to provide a series of control elements 432 that progressively increase in diameter. That is, a dimension of each control element 432 (or mass member) increases along the length of the body 420. The polar moment of inertia J(x) is constant due to the constant diameter of the body 420, whereas the increasing diameter of the control elements 432 results in an increase in the effective mass moment of inertia I(x). This approach is an example of the third mechanism described above to reduce the wave speed of torsional vibration. In this mechanism, it is considered that the spaced apart control elements 432 (or the step change in diameter provided by the control elements 432) presents an impedance to a vibration wavefront propagating through the body 420, which results in reflections causing interference (e.g., both constructive and deconstructive interference). In this way, the energy of the vibration wavefront is concentrated or "trapped" at frequency dependent locations and is damped thereat. This is known as rainbow trapping. In this way, vibrations may be damped by the control arrangement 300.

In this way, a significant reduction in wave speed of torsional vibration is possible. Whilst there may be a greater requirement for space to accommodate the control arrangement 400 and an overall greater mass may result, such an arrangement is advantageous in maintaining strength and stiffness of the body 420, which reduces the risk of failure of the body 420, for example due to fatigue.

The control arrangement of the third and fourth embodiments described above may be combined. Referring to Figure 5, an example of such a combined approach is shown. In this example, the body 520 has a tapered cross section along at least a part of its length (e.g., a first part of its length $l_1$), and a constant cross section along at least a part of its length (e.g., a second part of its length $l_2$). Along the first part of its length $l_1$, the body 520 tapers to a practical minimum radius, which may be governed by the required strength and/or stiffness of the body 520. As above, in this length part or region, this results in a reduction the polar moment of inertia J(x). Along the first part of its length $l_1$, the control elements 532 each have the same radius as the body 520 at its widest point thereby maintaining the same effective mass moment of inertia I(x) in this length part or region. That is, in a subset of the control elements 532 (i.e., those in the region $l_1$), a dimension of each control element is the same as a dimension of the body 520 (or the structure 510) at a first end. Along the second part of its length $l_2$, the body 520 has a constant diameter. The control elements 532 increase in radius along the second part of the length $l_2$ of the body 520. That is, the control elements 532 are arranged along the second part of the length $l_2$ of the body 520 to provide a series of control elements 532 that progressively increase in diameter. In other words, in a subset of the control elements 532 (i.e., those in region $l_2$), a dimension of each control element 532 increases along the length of the body 520. In this length part or region, the polar moment of inertia J(x) is constant due to the constant diameter of the body 520, whereas the increasing diameter of the control elements 532 results in an increase in the effective mass moment of inertia I(x).

Advantageously, by such a construction, the body 520 is not required to taper to a small diameter, such that strength and stiffness of the body 520 can be maintained, which reduces the risk of failure of the body 520, for example due to fatigue.

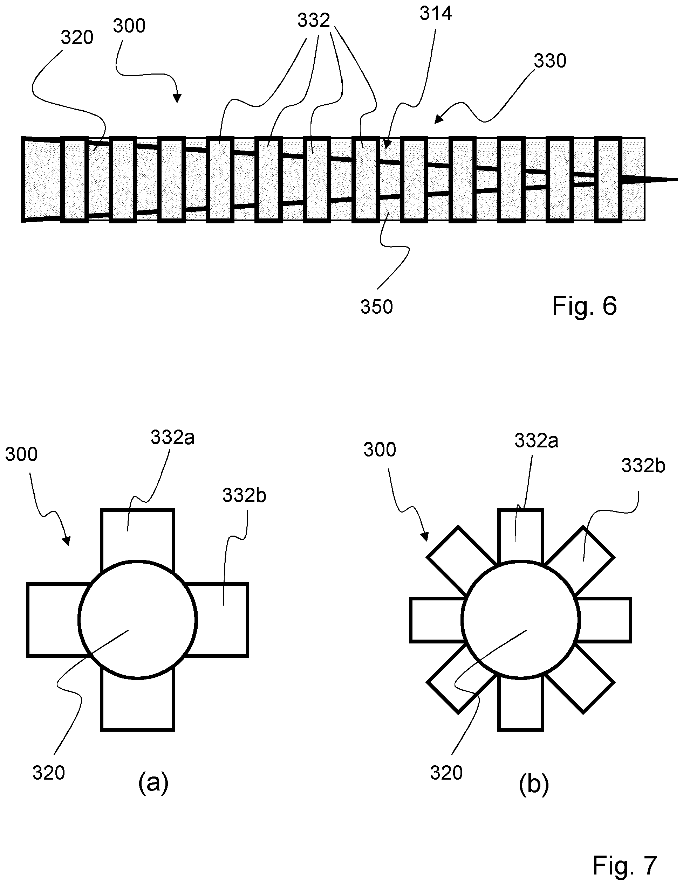

Applicable to all embodiments and examples described above, a damping material may be employed to increase the damping effect of the control arrangement. Referring to Figure 6, a damping material 350 is shown provided on a control arrangement 300 according to the third embodiment. However, as above, the damping material 350 may be applied in other embodiments in a corresponding manner, as will be appreciated by the skilled person from the present disclosure. The damping material 350 is provided between one or more pairs of control elements 332, which may mean between one or more pairs of mass members. The damping material 350 is provided in gaps 314 between adjacent control elements 332. The damping material 350 constrains adjacent control elements 332, thereby increasing torsional stiffness which reduces the wave speed. As a result, the damping material 350 advantageously increases the damping effect significantly. The amount of damping material 350 can be chosen, or adjusted, to control the amount of damping - in particular, the depth of fill of the gaps 314 can be chosen, or adjusted. The damping material 350 may be a viscoelastic material.

Whilst in some of the embodiments described above the control elements may be in the form of mass member discs (e.g., of disc-shaped or circular-shaped cross section), alternative cross sections are possible and indeed may be advantageous. In Figure 7(a) and 7(b), a cross section of a control arrangement 300 and body 320 is shown. Referring to Figure 7(a), a cross-shaped mass member cross section is shown. Each cross-shaped mass member may comprise a plurality of (e.g., four) mass sub-members 332a, 332b, and so on. Referring to Figure 7(b), a star-shaped mass member cross section is shown. Each star-shaped mass member may comprise a plurality of (e.g., eight) mass sub-members 332a, 332b, and so on. Such cross sections may be advantageous in reducing the mass of the control arrangement 300. In a highly advantageous construction not illustrated in the figures, the control arrangement 300 may be provided in a fluid bath - that is, the control elements 332 may be immersed in the fluid bath. The cross-shaped and star-shaped cross section of control elements 332 is highly advantageous in this scenario, as when provided in the fluid bath the damping effect is increased. This is due to the increase in surface area, and resistance to vibration of the control elements 332 by the fluid of the fluid bath. In this way, the damping effect can be increased without increasing the torsional stiffness (which would occur when a damping material 350 is provided to constrain the control elements 332, as described above). The fluid in the fluid bath may be oil, or other viscous fluid. The control arrangement 300 may comprise the fluid bath.

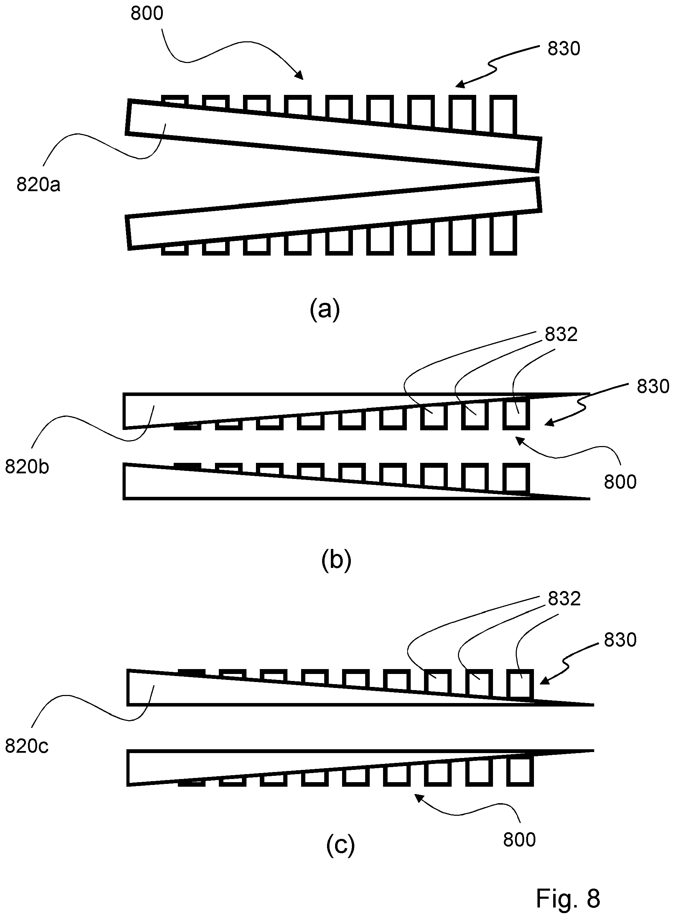

Figure 8 shows three examples of control arrangements 800 and hollow bodies 820a, 820b, 820c to which the present invention may be applied. In highly advantageous examples, the hollow bodies may be hollow structures, such as hollow shafts. Torsional stiffness of a hollow shaft is dependent on the wall thickness, so in examples of the present invention the wall thickness may be reduced instead of, or in addition to, the outer diameter of the body as in the examples described above.

Referring to Figure 8(a), a hollow body 820a of constant wall thickness is shown. A control element configuration 830 is provided on the body 820a.

Referring to Figure 8(b), a hollow body 820b of tapering (e.g., decreasing) wall thickness is shown. A control element configuration 830 is provided within the body 820b. Advantageously, the control elements 832 are thus protected from damage by being provided within the hollow body 820b. It will also be noted that the hollow body 820b has a constant outer diameter.

Referring to Figure 8(c), a hollow body 820c of tapering (e.g., decreasing) wall thickness is shown. A control element configuration 830 is provided on the outer surface of the body 820c.

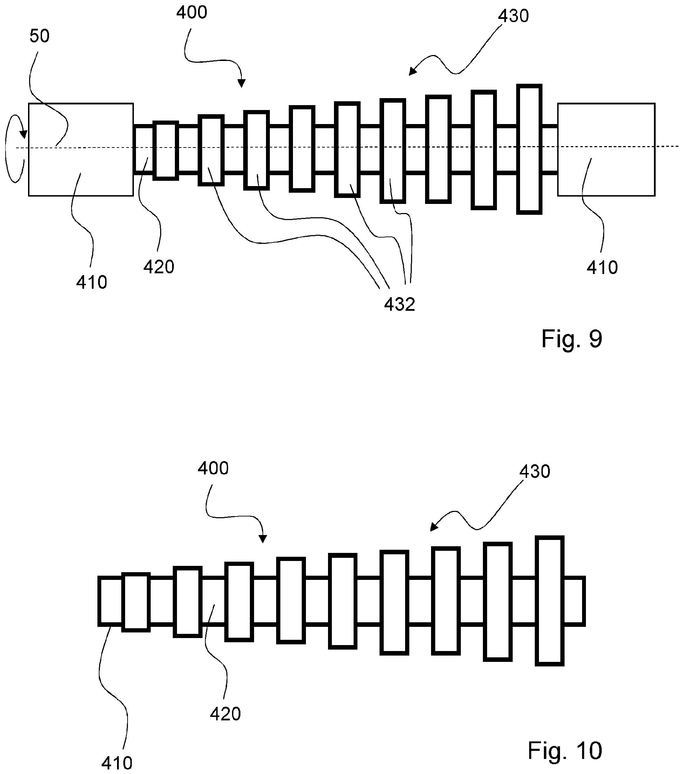

As described above, the control arrangement being coupled or couplable to the structure in various ways. In the examples shown in Figures 1 to 5, the control arrangement is coupled to the structure by being connected at an end of the structure. Figures 9 and 10 illustrated further ways in which the control arrangement may be coupled or couplable to the structure. Whilst in Figures 9 and 10 the control arrangement 400 of the fourth embodiment is shown, it will be appreciated that the manner of coupling described here in relation to Figures 9 and 10 may be applied to any of the control arrangements described herein.

Referring to Figure 9, the control arrangement 400 is coupled or couplable to the structure 410 by being provided or providable on or in the structure. In Figure 9, the control arrangement replaces a section of the structure 410. For example, a section or portion of the structure 410 may be replaced with the control arrangement 400, and the control arrangement may act as a part of the structure 410. The body 420 may be connected in, or between sections of, the structure 410, and may be connected to ends of the structure 410 as shown in the figure.

Referring to Figure 10, the control arrangement 400 is coupled or couplable to the structure 410 by virtue of the control arrangement 400 being part of the structure 410. For example, as shown in Figure 10, the body 420 of the control arrangement 400 is provided by the structure 410 itself. That is, no body 420 is provided that is distinct or separate to the structure 410.

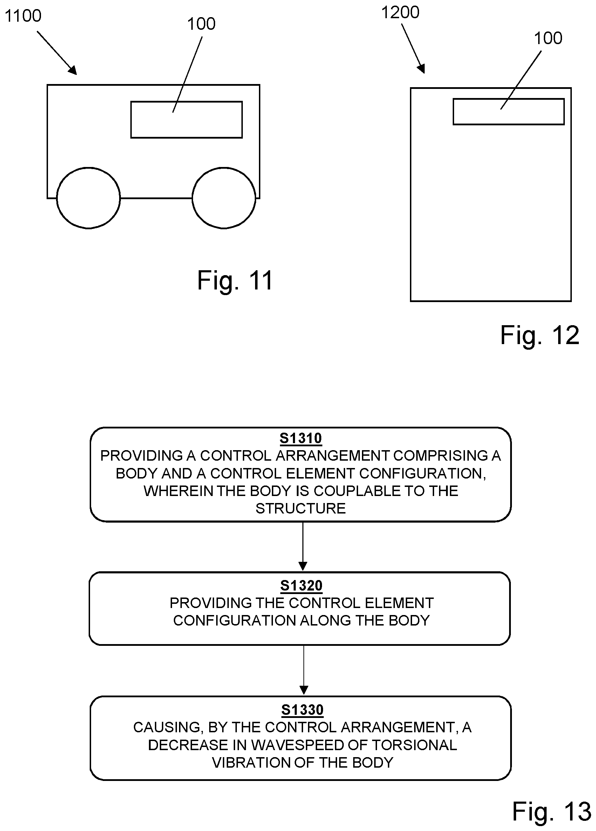

Referring to Figure 11, a vehicle 1100 is schematically shown. The vehicle 1100 comprises a control arrangement 100, according to any of the embodiments described herein. The vehicle 1100 may be a land-based vehicle, watercraft, or aircraft. The vehicle, or a component thereof, may comprise, or be, the body and/or structure.

Referring to Figure 12, a construction 1200 is schematically shown. The construction 1200 comprises a control arrangement 100, according to any of the embodiments described herein. The construction 1200 may be a building, infrastructure, construction, or the like. The structure, or a component thereof, may comprise, or be, the body and/or structure.

Referring to Figure 13, a method of controlling torsional vibration of a structure. Step 1310 comprises providing a control arrangement comprising a body and a control element configuration, wherein the body is couplable to the structure. Step 1320 comprises providing the control element configuration along the body. Step 1330 comprises causing, by the control arrangement, a decrease in wave speed of torsional vibration of the body.

**Claims**

1. A control arrangement for controlling torsional vibration of a structure, the control arrangement comprising a body and a control element configuration providable along the body, wherein the body is couplable to the structure, the control arrangement being configurable to cause a decrease in wave speed of torsional vibration of the body.

2. The control arrangement according to claim 1, wherein the control element configuration comprises one or more regions of different material characteristic.

3. The control arrangement according to claim 2, wherein the material characteristic is rigidity, density and/or shear modulus.

4. The control arrangement according to any one of the preceding claims, wherein the control element configuration comprises spaced apart mass members.

5. The control arrangement according to claim 4, wherein a damping material is provided between one or more pairs of mass members.

6. The control arrangement according to claim 4 or claim 5, wherein one or more of the mass members have:

   a disc-shaped cross section;
   a cross-shaped cross section; or
   a star-shaped cross section.

7. The control arrangement according to any one of the preceding claims, wherein the body has a tapered cross section along at least part of its length.

8. The control arrangement according to claim 7 when dependent directly or indirectly on claim 4, wherein in at least a subset of the mass members, a dimension of each mass member is the same as a dimension of the structure at a first end.

9. The control arrangement according to any one of the preceding claims, wherein the body has a constant cross section along at least part of its length.

10. The control arrangement according to claim 9 when dependent directly or indirectly on claim 4, wherein in at least a subset of the mass members, a dimension of each mass member increases along the length of the body.

11. The control arrangement according to any one of the preceding claims, wherein the body has a first region of tapering cross section along a first part of its length and a second region of constant cross section along a second part of its length.

12. The control arrangement according to any one of the preceding claims, wherein the structure is a shaft.

13. The control arrangement according to any one of the preceding claims, wherein the body is hollow, optionally wherein the hollow body comprises at least a region of constant wall thickness and/or at least a region of decreasing wall thickness.

14. The control arrangement according to claim 13, wherein the control element configuration is provided on an inner surface and/or an outer surface of the hollow body.

15. A method of controlling torsional vibration of a structure, the method comprising:

   providing a control arrangement comprising a body and a control element configuration, wherein the body is couplable to the structure;
   providing the control element configuration along the body; and
   causing, by the control arrangement, a decrease in wave speed of torsional vibration of the body.

Fig. 1

Fig. 2

Fig. 3

Fig. 4

Fig. 5

Fig. 6

(a)

(b)

Fig. 7

800

830

820a

(a)

832

830

820b

800

(b)

832

830

820c

800

(c)

Fig. 8

Fig. 9

Fig. 10

EP 4 495 454 A1

**Fig. 11**

1100

100

**Fig. 12**

1200

100

**S1310**
PROVIDING A CONTROL ARRANGEMENT COMPRISING A BODY AND A CONTROL ELEMENT CONFIGURATION, WHEREIN THE BODY IS COUPLABLE TO THE STRUCTURE

**S1320**
PROVIDING THE CONTROL ELEMENT CONFIGURATION ALONG THE BODY

**S1330**
CAUSING, BY THE CONTROL ARRANGEMENT, A DECREASE IN WAVESPEED OF TORSIONAL VIBRATION OF THE BODY

**Fig. 13**

14

Europäisches Patentamt

European Patent Office

Office européen des brevets

# EUROPEAN SEARCH REPORT

**Application Number**

EP 23 27 5109

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 139 120 A (GOMI SHOJI [JP]) 18 August 1992 (1992-08-18) | 1-3,9, 12,15 | INV. F16F15/10 |
| A | * figures 1, 2, 4 * | 4-8,10, 11,13,14 | |
| X | EP 0 479 736 A1 (FIAT AUTO SPA [IT]) 8 April 1992 (1992-04-08) | 1-4,6-9, 11,12,15 | |
| A | * figure 1 * | 10,13,14 | |
| X | JP H09 14350 A (NOK MEGULASTIK CO LTD) 14 January 1997 (1997-01-14) | 1-9, 11-15 | |
| A | * figures 2-5 * | 10 | |
| X | US 2 724 983 A (O'CONNOR BERNARD E) 29 November 1955 (1955-11-29) | 1-6,9, 12-15 | |
| A | * figure 3 * | 10 | |

**TECHNICAL FIELDS SEARCHED (IPC)**

F16F

The present search report has been drawn up for all claims

| Place of search | Date of completion of the search | Examiner |
|---|---|---|
| The Hague | 12 January 2024 | Huyge, Kevin |

EPO FORM 1503 03.82 (P04C01)

## ANNEX TO THE EUROPEAN SEARCH REPORT
## ON EUROPEAN PATENT APPLICATION NO.

EP 23 27 5109

This annex lists the patent family members relating to the patent documents cited in the above-mentioned European search report.
The members are as contained in the European Patent Office EDP file on
The European Patent Office is in no way liable for these particulars which are merely given for the purpose of information.

12-01-2024

| Patent document cited in search report | | Publication date | Patent family member(s) | | Publication date |
|---|---|---|---|---|---|
| US 5139120 | A | 18-08-1992 | DE | 4110845 A1 | 10-10-1991 |
| | | | JP | H03292436 A | 24-12-1991 |
| | | | US | 5139120 A | 18-08-1992 |
| EP 0479736 | A1 | 08-04-1992 | EP | 0479736 A1 | 08-04-1992 |
| | | | IT | 1241714 B | 31-01-1994 |
| | | | PL | 291901 A1 | 01-06-1992 |
| | | | RU | 2037686 C1 | 19-06-1995 |
| JP H0914350 | A | 14-01-1997 | NONE | | |
| US 2724983 | A | 29-11-1955 | GB | 691554 A | 13-05-1953 |
| | | | US | 2724983 A | 29-11-1955 |

EPO FORM P0459

For more details about this annex : see Official Journal of the European Patent Office, No. 12/82